(19) **Europäisches Patentamt / European Patent Office / Office européen des brevets**

(11) **EP 3 077 229 B1**

(12) **EUROPEAN PATENT SPECIFICATION**

(45) Date of publication and mention of the grant of the patent:
**23.08.2017 Bulletin 2017/34**

(21) Application number: **14828281.7**

(22) Date of filing: **20.11.2014**

(51) Int Cl.:
**B60G 17/018** (2006.01)   **B60G 17/0185** (2006.01)

(86) International application number:
**PCT/IB2014/066190**

(87) International publication number:
**WO 2015/083027 (11.06.2015 Gazette 2015/23)**

(54) **METHOD AND DEVICE FOR DETERMINING MULTIPLICATIVE FAULTS OF A SENSOR INSTALLED IN A SYSTEM COMPRISING A PLURALITY OF SENSORS**

VERFAHREN UND VORRICHTUNG ZUR BESTIMMUNG MULTIPLIKATIVER FEHLER EINES SENSORS, DER IN EINEM SYSTEM MIT EINER VIELZAHL VON SENSOREN INSTALLIERT IST

MÉTHODE ET DISPOSITIF POUR DETERMINER DES FAUTES MULTIPLICATIVES D'UN CAPTEUR INSTALLÉ DANS UN SYSTÈME COMPRENANT UNE PLURALITÉ DE CAPTEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2013 IT MI20132026**

(43) Date of publication of application:
**12.10.2016 Bulletin 2016/41**

(73) Proprietor: **E-Shock S.r.l.**
**20134 Milan (IT)**

(72) Inventors:
• **BOTTELLI, Stefano**
  **I-21100 Varese (IT)**
• **SAVARESI, Sergio Matteo**
  **I-26100 Cremona (IT)**
• **SPELTA, Cristiano**
  **I-20882 Bellusco (MI) (IT)**
• **DELVECCHIO, Diego**
  **I-20128 Milan (IT)**
• **BONIOLO, Ivo**
  **I-20183 Bovisio Masciago (MB) (IT)**

(74) Representative: **Fiorentino, Luca et al**
**Gregorj S.r.l.**
**Intellectual Property**
**Via L. Muratori, 13 b**
**20135 Milano (IT)**

(56) References cited:
• **HEREDIA G ET AL: "Sensor fault detection in small autonomous helicopters using observer/Kalman filter identification", MECHATRONICS, 2009. ICM 2009. IEEE INTERNATIONAL CONFERENCE ON, IEEE, PISCATAWAY, NJ, USA, 14 April 2009 (2009-04-14), pages 1-6, XP031457315, ISBN: 978-1-4244-4194-5**
• **BOULAID BOULKROUNE ET AL: "Combined Signal and Model-Based Sensor Fault Diagnosis for a Doubly Fed Induction Generator", IEEE TRANSACTIONS ON CONTROL SYSTEMS TECHNOLOGY, vol. 21, no. 5, 1 September 2013 (2013-09-01), pages 1771-1783, XP055101501, ISSN: 1063-6536, DOI: 10.1109/TCST.2012.2213088**
• **ABDELGHANI ET AL: "Sensor validation for structural systems with multiplicative sensor faults", MECHANICAL SYSTEMS AND SIGNAL PROCESSING, LONDON, GB, vol. 21, no. 1, 1 January 2007 (2007-01-01), pages 270-279, XP005694612, ISSN: 0888-3270, DOI: 10.1016/J.YMSSP.2005.11.001**
• **GARIMELLA P ET AL: "An Adaptive Robust Framework for Model-Based State Fault Detection", AMERICAN CONTROL CONFERENCE, 2006 MINNEAPOLIS, MN, USA JUNE 14-16, 2006, PISCATAWAY, NJ, USA,IEEE, 14 June 2006 (2006-06-14), pages 5692-5697, XP010929948, DOI: 10.1109/ACC.2006.1657632 ISBN: 978-1-4244-0209-0**

## Description

### TECHNICAL FIELD OF THE INVENTION

The object of the present invention is a method and a device for determining faults of a sensor installed in a system comprising a plurality of sensors. In particular, multiplicative faults will be taken into consideration. The expression "multiplicative fault" indicates malfunctioning of a sensor, which causes the same sensor to generate a faulty signal measurement of the measured quantity, faulty as proportional to the signal that would be generated in the absence of malfunctioning, i.e. obtained from the last multiplied by a multiplicative factor. Multiplicative faults stand out and have different characteristics from other types of faults, such as additive faults.

For example, the system can be a vehicle, such as a motorcycle equipped with active or semi-active suspensions and sensors necessary for its control. Alternatively, the system can be any system equipped with sensors necessary to its operation or to its control.

### PRIOR ART

With reference, for example, to said motorcycle with active or semi-active suspensions, it is necessary to equip it with sensors suitable to detect its dynamic and/or kinematic parameters, on which the suspension behavior is adjusted. Of course, incorrect readings by the sensors can lead to an abnormal control of the suspensions, with consequent risks for the stability of the motorcycle and then for the driver's safety.

Methods and related devices have therefore been devised for the purpose of verifying the correct operation of sensors installed in a vehicle or in a system in general.

Referring to a detection of multiplicative faults, known methods expect to calculate known system parameters (such as, for example, the mass of a vehicle, the elastic constant of one of its suspensions) from detections of further quantities by the sensors, whose correct operation has to be verified (such as, for example, potentiometers associated with suspensions or acceleration sensors). The parameters of the system are calculated using mathematical relationships, which model the system from detections made by the sensors. Since these system parameters are known, if their estimate significantly differs from their effective value, this means that the sensors are malfunctioning.

These methods, however, have the disadvantage that the system parameters are not easily estimated, as they are often difficult to estimate, especially in very complex systems. Moreover, it is difficult to determine the deviation threshold between the parameter of the effective system and the parameter of the estimated system, which causes a multiplicative error of the sensor. Furthermore, in systems equipped with many sensors, in case of deviation between the parameter of the effective system and the parameter of the estimated system, it is difficult to determine which is the faulty sensor that caused such deviation.

A method and an apparatus for determining multiplicative faults of a sensor installed in a system comprising a plurality of sensor are disclosed in Heredia G. et al.: "Sensor fault detection in small autonomous helicopters using observer/Kalman filter identification".

### SUMMARY OF THE INVENTION

The object of the present invention is to make available a method and a device for determining multiplicative faults of a sensor installed in a system comprising a plurality of sensors, that allow to overcome the disadvantages mentioned with reference to prior art, in particular that allow in a quite simple and reliable way to determine the presence of multiplicative faults in the sensors of a system.

This and other objects are achieved through a method for determining multiplicative faults of a sensor installed in a system comprising a plurality of sensors according to claim 1 and a device for determining multiplicative faults of a sensor installed in a system comprising a plurality of sensors according to claim 8.

### BRIEF DESCRIPTION OF THE FIGURES

To better understand the invention and to appreciate its advantages, some of its nonlimiting exemplary embodiments will be described below, referring to the attached figures, wherein:

Figure 1 is a block diagram of a device for determining multiplicative faults of a sensor installed in a system comprising a plurality of sensors according to a possible embodiment of the invention;

Figure 2 is a block diagram, representative of details of the modules, labelled 2', 2"or 2'" in Figure 1;

Figure 3 is a block diagram, representative of details of the module, labelled 9 in Figure 1;

Figure 4 schematically shows a dynamic model of a motorcycle equipped with a device according to the invention;

Figure 5 is a block diagram showing one possible method of determining multiplicative faults of a sensor of the motorcycle in Figure 4.

### DETAILED DESCRIPTION OF THE INVENTION

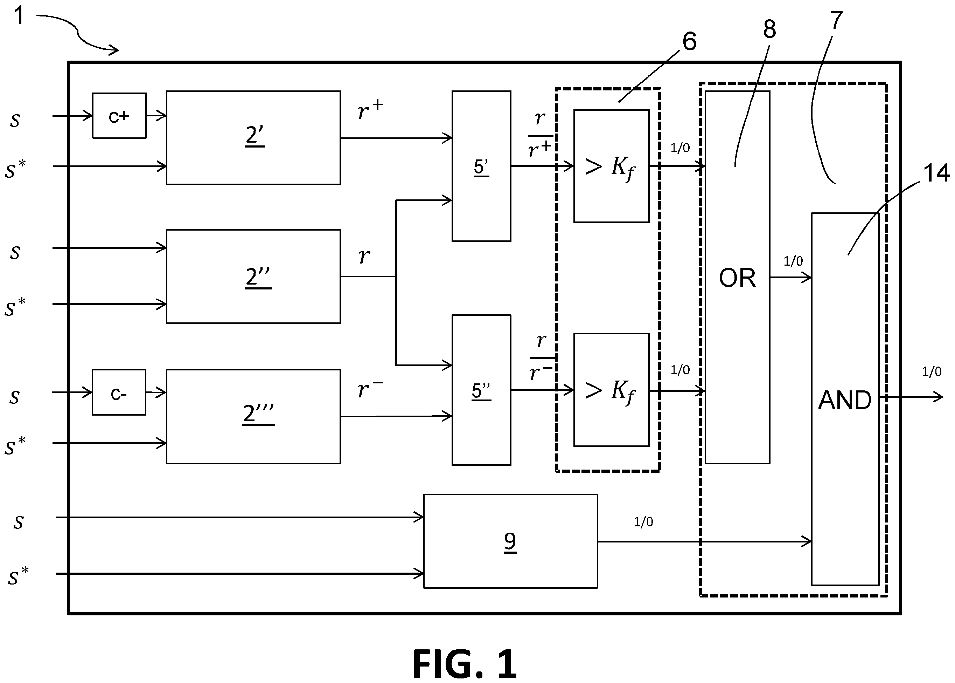

With reference to the attached drawings, Figure 1 shows a block diagram of a device for determining multiplicative faults of a sensor installed in a system comprising a plurality of sensors. The device, as a whole, is referenced as 1. Device 1 is suitable to provide a method for determining multiplicative faults of a sensor installed in said system.

For example, the term "system" may refer to a vehicle, to a motorcycle or in general to a system, subjected to some form of control on the basis of signals generated by sensors associated with the same. Hereafter an example of application of the device, in a motorcycle equipped with semi-active suspensions, will follow.

Device 1 is suitable to receive input signals coming from the sensors installed in the system. In the following description and in the appended claims, the expression "target sensor" will indicate the sensor of the system, wherein device 1 must determine possible multiplicative faults, and the expression "auxiliary sensors" will indicate sensors of the system besides the target sensor. Note that, considering a system with a plurality of sensors, the device is in general adapted to verify a correct operation of all the sensors of the system, or at least of some. Therefore it's impossible to strictly define a target sensor: the same sensor could be a target sensor or an auxiliary sensor depending on the type of test performed by device 1.

The target sensor is suitable to generate an effective target signal s, representative of a target quantity of such system, measured by the target sensor itself.

Similarly, the auxiliary sensors are adapted to generate auxiliary signals, respectively representative of auxiliary quantities, measured by the auxiliary sensors themselves.

Device 1 according to the invention comprises inputs for the effective target signal s from the target sensor and for the auxiliary signals from the auxiliary sensors.

Correspondingly, the method according to the invention comprises a step of detection of the effective target signal s from the target sensor and a step of detection of the auxiliary signals from the auxiliary sensors.

On the basis of the auxiliary signals, device 1, via a corresponding module not shown in Figure 1, implements a step of the method to determine an estimated target signal s*, representative of the target quantity.

Note that the auxiliary sensors can alternatively measure further, i.e. different, quantities besides the quantity measured by the target sensor or the same quantity measured by the target sensor.

If the auxiliary sensors measure different system quantities with respect to the target sensor, the estimated target signal is determined by mathematical relationships, representative of the system, that correlate the quantity, measured by the target sensor, to the quantities, measured by the auxiliary sensors. The estimated target signal s* can be determined, for example, by means of a Kalman filter, realized on the basis of a mathematical system model. The effective target signal s, coming from the target sensor, whose possible multiplicative faults are to be verified, and the estimated target signal s*, which is an estimate of the signal of the target sensor and which is obtained from detections of additional sensors besides the target sensor itself, i.e. starting from the auxiliary signals of the auxiliary sensors, are input signals of device 1.

If the auxiliary sensors measure the same quantity as the target sensor, the estimated target signal s* is directly identified by means of the auxiliary signal of one of the auxiliary sensors themselves. Normally, in this case, a single auxiliary sensor can suffice unless, for safety reasons, it is not necessary to further make the system redundant.

The effective target signal s and the estimated target signal s* reach a first 2', a second 2" and a third 2''' modules of device 1. They respectively carry out three comparisons, in particular determining a first, a second and a third quadratic differences.

Specifically, the first module 2' calculates the quadratic difference r+ between the effective target signal s multiplied by a positive multiplicative factor c+ greater than 1, for example equal to 1.3, and the estimated target signal s*. The first module 2' performs the following operation:

$$r+ = (c+\cdot s - s^*)^2$$

The second module 2" calculates the quadratic difference r between the effective target signal s and the estimated target signal s*. The second module 2" performs then the following operation:

$$r = (s - s^*)^2.$$

Finally, the third module 2''' calculates the quadratic difference r- between the effective target signal s multiplied by a positive multiplicative factor c- smaller than 1, for example equal to 0.7, and the estimated target signal s*. The third module 2''' then performs the following operation:

$$r- = (c- \bullet s - s^*)^2.$$

The first 2', the second 2" and the third 2''' modules are respectively suitable to implement the steps of the method, according to the invention, of:

- determining said first quadratic difference r+ between the effective target signal s multiplied by the multiplicative factor c+ and the estimated target signal s*;

- determining said second quadratic difference r between the effective target signal s and the estimated target signal s*;

- determining said third quadratic difference r- between the effective target signal s multiplied by a multiplicative factor c- and the estimated target signal s*.

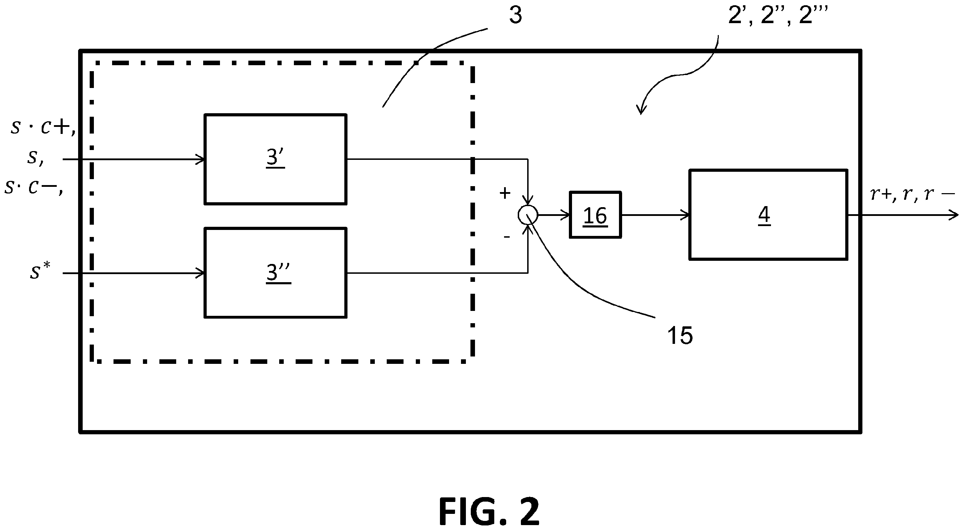

According to a possible embodiment, the first 2', the second 2" and the third 2''' modules for determining the quadratic differences between the effective target signal s and the estimated target signal s* comprise a pass-band filter 3 for filtering these in a predefined bandwidth. With reference to Figure 2, it shows a possible block diagram of modules 2', 2" and 2'''. In them the pass-band filter 3 comprises a first pass-band filter 3' for the filtering of the effective target signal s (or of the latter multiplied by the multiplicative factors c+ or c-) and a second pass-band filter 3" for the filtering of the estimated target signal s*. The pass-band filter 3 is adapted to implement a step in the method of filtering the effective target signal s and the estimated target signal s*, through a pass-band filter, before the first r+, the second r and the third r- quadratic differences are calculated. The quadratic difference may be obtained via a summing junction 15, followed by a module 16 for determining the quadratic difference of the signals.

The filtering of the signal of the effective target signal s and of the estimated target signal s*, to be carried out in the same frequency band, ensures that, in the selected bandwidth, the effective target signal s and the estimated target signal s* are as similar as possible, in the absence of faults in the target sensor.

Preferably, the first 2', the second 2"and the third 2''' modules for determining the quadratic differences r+, r and r- also comprise a low-pass filter 4, which consequently filters said quadratic differences, reducing the oscillations. The method according to the invention preferably includes a corresponding step of filtering through a low-pass filter the first r+, the second r and the third r-quadratic differences between the actual target signal s and the estimated target signal s*.

Going now back to Figure 1, the first r+, the second r and the third r- quadratic differences, calculated as described by modules 2', 2" and 2''', are compared in a first 5' and in a second 5" modules of device 1, which are respectively adapted to implement the following steps of the method according to the invention:

- determining a first ratio r/r+ between the second r and the first r' quadratic differences;

- determining a second ratio r/r- between the second r and the third r- quadratic differences.

Device 1 also comprises a module 6 for comparing the first r/r+ and the second r/r- ratios with a first comparison factor Kf. Module 6 performs a corresponding step in the method of comparing the first and the second ratios with said first comparison factor Kf. The first comparison factor Kf is preferably greater than 1 and is for example equal to 1.5.

Each comparison by module 6 between the first r/r+ ratio and the first comparison factor Kf, and between the second r/r- ratio and the first comparison factor Kf, can give a positive result (i.e. ratio greater than Kf) or a negative one (i.e. ratio smaller than or equal to Kf). For example, value 1 can be assigned to a positive result and value 0 can be assigned to a negative result.

The result of the comparison made by the comparison module 6 is evaluated by a decisional module 7 of device 1. The decisional module 7 is configured:

- to ascertain the absence of a multiplicative fault of the target sensor, if both the first r/r+ and the second r/r- ratios are smaller than or equal to the first comparison factor Kf. Therefore, for example, it is possible to conclude that the target sensor works properly, if two 0 are obtained from the comparison module 6.

- to ascertain that there is a possible multiplicative fault of the target sensor if at least one between the first r/r+ and the second r/r- ratios is greater than the first comparison factor.

The above-mentioned options can be determined by a module 8 of the decisional module 7, that performs a logical operation OR. The absence of multiplicative faults matches a logical value 0, while the possibility of multiplicative faults matches a logical value 1.

The above-described criteria lead to the conclusion that a multiplicative fault of the target sensor is absent or that a multiplicative fault is possible. In this last case, however, the multiplicative fault is not ascertained, but only possible. It is therefore necessary to verify the possibility of a multiplicative fault.

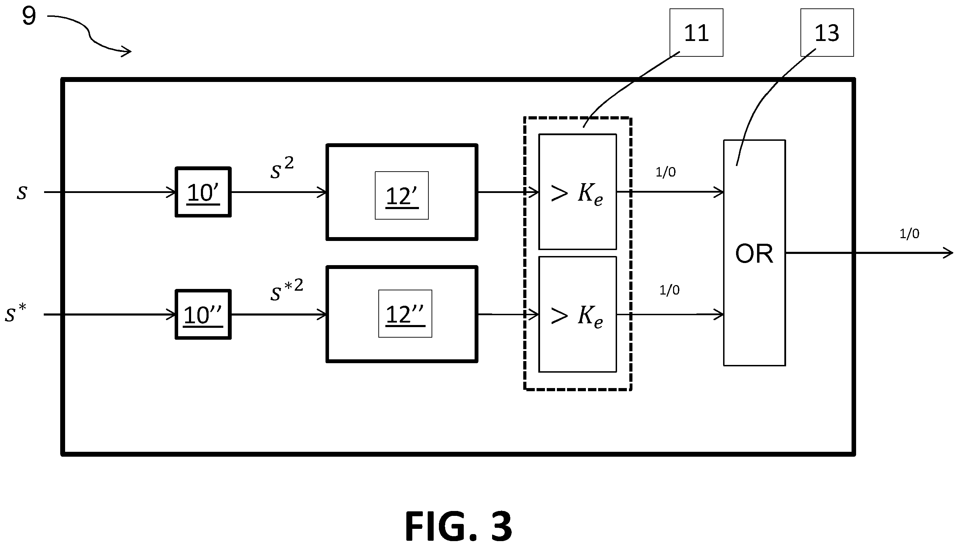

To this end, device 1 comprises a module 9 for determining a confirmation parameter of a multiplicative fault of the target sensor. Module 9 is schematically shown in more detail in Figure 3.

Module 9 for determining the confirmation parameter comprises a module 10' for determining the square of the effective target signal s and a module 10" for determining the square of the estimated target signal s*. Module 10' is adapted to implement a corresponding step of the method, according to the invention, of determining the square of the effective target signal s and module 10" is suitable to implement a corresponding step of the method, according to the invention, of determining the square of the estimated target signal s*.

Module 9 also comprises a module 11 for comparing the square of the effective target signal s, determined by module 10', and the square of the estimated target signal s*, determined by module 10", with a second comparison factor Ke. Module 11 is therefore adapted to implement a step in the method of comparison of the effective target signal s and the square of the estimated target signal s* with said second comparison factor Ke.

Preferably, module 9 for determining the confirmation parameter of multiplicative faults also comprises a first low-pass filter 12' for filtering the square of the effective target signal s and a second low-pass filter 12" for filtering the square of the estimated target signal s*. The first 12' and the second 12" low-pass filters implement corresponding steps in the method of filtering the square of the effective target signal s and the square of the estimated target signal s*.

The comparisons made by the comparison module 11 can have a positive or a negative result, depending on whether the square of the effective target signal s and the square of the estimated target signal s* are greater than the second comparison factor Ke or not. For example, in case of positive results, an output value 1 is obtained, and, in case of negative results, an output value 0 is obtained. Therefore, at the output of module 11, a pair of values is obtained, each equal to 1 or 0.

If at least one of the above-mentioned comparisons made in module 11 gives a positive result, the module for determining the confirmation parameter of the multiplicative fault 9 generates a confirmation signal of the multiplicative fault. For example, such operation can be performed by a module 13, configured to perform a logical operator OR. In case of confirmation of the multiplicative fault, therefore, at the output of module 13 a value 1 will be generated. The other way round, a value 0 will be generated.

Advantageously, the decisional module 7 is configured so to determine the presence of a multiplicative fault of the target sensor, if the possibility of a multiplicative fault is ascertained in the previously stated manner, i.e. if at least one between the first r/r+ and the second r/r- ratios is greater than the first comparison factor (as a consequence with value 1 at the output of the logical module OR 8) and if at the same time the confirmation of its multiplicative fault is determined by module 9, i.e. if at least one between the square of the effective target signal s and the square of the estimated target signal s* is greater than the second comparison factor Ke (thus with value 1 at the output of module 9). Such operation can be performed by a confirmation module 14 of the decisional module 7 able to implement the logical operator AND, where the exit values described with reference to modules 8 and 9 enter. The final confirmation module 14 will generate an output value 1, if a multiplicative fault is ascertained, and an output value 0, if a multiplicative fault is absent.

Module 9 is adapted to implement a corresponding step in the method, according to the invention, of determining the presence of multiplicative faults of the target sensor, if said possibility of a multiplicative fault of the target sensor is determined and if at least one between the square of the effective target signal s and the square of the estimated target signals* is greater than the second comparison factor Ke.

A possible example of application of the device and of method according to the invention is now described.

EXAMPLE

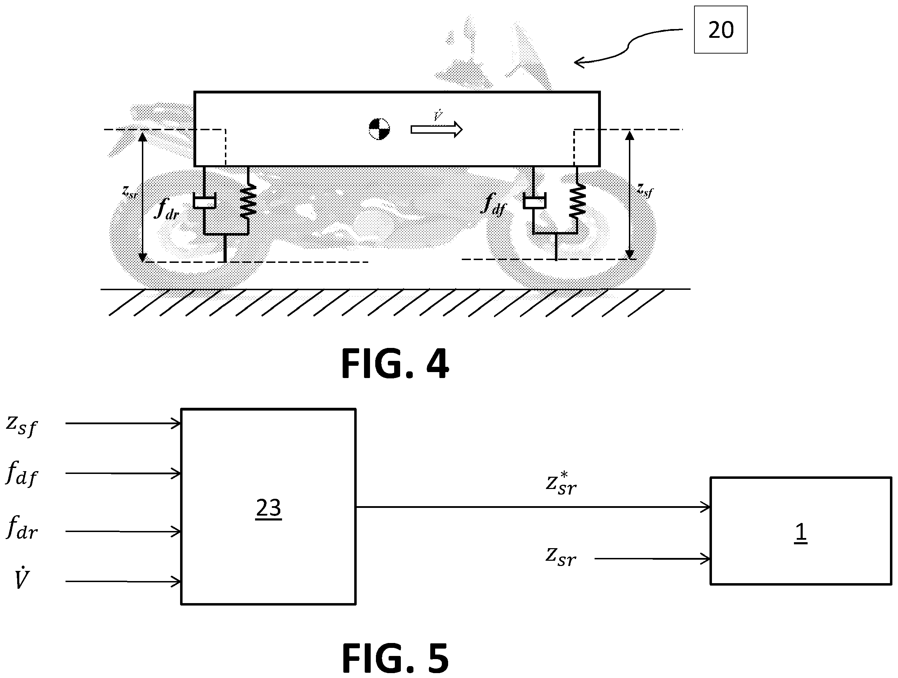

With reference to Figure 4, therein a motorcycle 20 equipped with semi-active suspensions (i.e. with suspensions where the exerted force can be electronically selected and changed during use) is shown. Examples of such suspensions are the electro-hydraulic, magneto-rheological or electro-rheological semi-active suspensions. In these types of suspensions it is possible to act on the damping coefficient, by sending an appropriate control signal.

Motorcycle 20 comprises an accelerator sensor suitable to measure the longitudinal horizontal acceleration of the motorcycle V . Motorcycle 20 further comprises a first sensor (for example a potentiometer) for the measurement of the elongation of the front suspension $z_{sf}$ and a second sensor (for example a further potentiometer) for the measurement of the elongation of the rear suspension $z_{sr}$.

The motorcycle is schematically shown as a single suspended mass, that can have the above-mentioned longitudinal horizontal accelerations V .

The rear suspension is schematically shown as a spring and a damper with a damping coefficient $f_{dr}$ in parallel with the spring. The damping $f_{dr}$ is a controllable parameter of the suspension.

The front suspension is shown schematically as a spring and a damper with a damping coefficient $f_{df}$ in parallel with the spring. The damping $f_{df}$ is a controllable parameter of the suspension.

The mass of the motorcycle is suspended with respect to the ground by the front and rear suspensions, schematically shown in said manner.

The aim is to ascertain the presence of multiplicative faults of the potentiometer associated with the rear suspension.

The motorcycle-system can be described by the general system:

$$x\,(k+1) = Ax\,(k) + Bu\,(k) + w\,(k)$$

$$y\,(k) = Cx\,(k) + Du\,(k) + v\,(k)$$

wherein:

- k is the considered discrete instant;

- x is the state of the system, in this case given by: $x = z_{sr}$

- u is the considered input, in this case given by:

$$u = \begin{bmatrix} u_1 \\ u_2 \\ u_3 \end{bmatrix} = \begin{bmatrix} f_{df}(\dot{z}_{sf}) \\ f_{dr}(\dot{z}_{sr}) \\ \dot{V} \end{bmatrix}$$

- y is the output of the system, in this case given by:
$y = z_{sf}$

- w is the disturbance of the process;

- v is the measurement disturbance.

The Kalman filter is able to determine by a recursive algorithm the value assumed by the state x in the successive instants, starting from the measured inputs u. The outputs y are related to the inputs u by the mathematical model which describes the motorcycle. It is therefore possible to make an estimate of the quantities of interest, in this case the estimate of the stroke of the rear suspension. The real signal of such quantity is also available. However it is not used for determining its estimated value, based instead on the other measured quantities.

With reference to Figure 5, it shows the operating diagram of the system. The motorcycle is equipped with a device 1 according to the invention, which performs an evaluation of the multiplicative faults of the rear potentiometer, comparing the effective signal $z_{sr}$ coming from it with the estimated signal $z_{sr}{}^*$. The estimated signal $z_{sr}{}^*$ of the rear potentiometer is evaluated on the basis of the previously defined variables u and y, entering into an estimation module 23, which uses the previously described Kalman filter to determine the estimated signal $z_{sr}{}^*$.

For the estimate of multiplicative faults of the rear potentiometer, device 1 for a testing of the multiplicative faults compares the measured elongation of the rear suspension $z_{sr}$ with the estimated rear elongation $z_{sr}{}^*$, determined by the estimation module 23. The result of this comparison will be a value equal to 1 or to 0. In case the comparison gives an output value 1, it can be stated that the elongation sensor of the rear suspension has multiplicative faults.

The system and the method according to the invention allow to determine, with a low margin of error, the presence of multiplicative faults of the system sensors, even when known methods are not reliable. In fact, the method and the device according to the invention are based on the observation of the signal in a sensor, where the presence of malfunctioning is to be verified, and not on the impact of its faults on other system parameters. An estimate is, therefore, simpler and, consequently, more reliable.

Note that, in the present description and in the appended claims, device 1, as well as the elements named "module", can be implemented by hardware devices (e.g. control units), by software or by a combination of hardware and software.

From the above description of the device and of the method for determining multiplicative faults in a sensor installed in a system comprising a plurality of sensors, the skilled person, in order to satisfy specific contingent needs, may make several additions, modifications or replacements of elements with other functionally equivalent, without however departing from the scope of the appended claims.

**Claims**

1. Method for determining multiplicative faults of a sensor installed in a system comprising a plurality of sensors, comprising the steps of:

    - detecting an effective target signal (s) from a target sensor, representative of a target quantity of the system;
    - detecting one or more auxiliary signals respectively from one or more auxiliary sensors of the system besides the target sensor, representative of auxiliary quantities of the system;
    - determining an estimated target signal (s*) representative of the target quantity from the one or more auxiliary signals;

    **characterized in that** the method further comprises:

    - determining a first quadratic difference (r+) between the effective target signal (s) multiplied by a multiplicative positive factor (c+) greater than 1, and the estimated target signal (s*);
    - determining a second quadratic difference (r) between the effective target signal (s) and estimated target signal (s*);
    - determining a third quadratic difference (r-) between the effective target signal (s) multiplied by a positive multiplicative factor (c-) smaller than 1, and the estimated target signal (s*);
    - determining a first ratio (r/r+) between the second (r) and first quadratic differences (r+);
    - determining a second ratio (r/r-) between the second (r) and third quadratic differences (r-);
    - comparing the first (r/r+) and second ratios (r/r-) with a first comparison factor (Kf);
    - determining the square of the effective target signal (s);
    - determining the square of the estimated target signal (s*);
    - comparing the square of the effective target signal (s) and square of estimated target signal (s*) with a second comparison factor (Ke);
    - establishing the presence of multiplicative faults of target sensor if at least one between the first (r/r+) and second ratios (r/r-) is greater than the first comparison factor (Kf), and at least one between the square of the effective target signal (s) and square of the estimated target signal (s*) is greater than said second comparison factor (Ke).

2. Method according to claim 1, comprising a step of filtering by a pass-band filter (3, 3', 3") the effective target signal (s) and estimated target signal (s*) before determining the first (r+), second (r) and third quadratic differences (r-).

3. Method according to claim 1 or 2, comprising a step of filtering by a pass-band filter the first (r+), second (r) and third quadratic differences (r-) before determining the first ratio (r/r+) and second ratio (r/r-).

4. Method according to any of the preceding claims, further comprising a step of filtering by a pass-band filter (12', 12") the square of the effective target signal (s) and square of the estimated target signal (s*) before comparing them with the second comparison factor (Ke).

5. Method according to any of claims 1-4, wherein said one or more auxiliary sensors comprise an auxiliary sensor adapted to generate an auxiliary signal distinct from the target signal also representative of the target quantity, wherein said step of determining the estimated target signal (s*) comprises a step of identifying the auxiliary signal detected with the estimated target signal (s*).

6. Method according to any of claims 1-4, wherein said one or more auxiliary signals of the one or more auxiliary sensors are representative of auxiliary quantities of the system besides the target quantity, wherein said step of determining the estimated target signal (s*) comprises a step of calculating the estimated target signal (s*) by mathematical relationships between the auxiliary quantities of the system, represented by the one or more detected auxiliary signals.

7. Method according to the preceding claim, wherein said step of determining the estimated target signal (s*) representative of the target quantity from the one or more auxiliary signals is performed by a Kalman filter representative of the system.

8. Device (1) for determining multiplicative faults of a sensor installed in a system comprising a plurality of sensors, comprising:

- a target sensor for detecting a target quantity of the system, adapted to generate an effective target signal (s) representative of the target quantity of the system;
- one or more auxiliary sensors respectively for detecting one or more auxiliary quantities of the system, adapted to generate one or more auxiliary signals representative of the auxiliary quantities of the system;
- a module for determining an estimated target signal (s*) representative of the target quantity from the one or more auxiliary signals;

**characterized in that** the device (1) further comprises:

- a module (2') for determining a first quadratic difference (r+) between the effective target signal (s) multiplied by a positive multiplicative factor (c+) greater than 1 and the estimated target signal (s*);
- a module (2') for determining a second quadratic difference (r) between the effective target signal (s) and estimated target signal (s*);
- a module (2") for determining a third quadratic difference (r-) between the effective target signal (s) multiplied by a positive multiplicative factor (c-) smaller than 1 and estimated target signal (s*);
- a module (5') for determining a first ratio (r/r+) between the second (r) and first quadratic differences (r+);
- a module (5") for determining a second ratio (r/r-) between the second (r) and third quadratic differences (r-);
- a module (6) for comparing the first (r/r+) and second ratios (r/r-) with a first comparison factor (Kf);
- a module (10') for determining the square of the effective target signal (s);
- a module (10") for determining the square of the estimated target signal (s*);
- a module (11) for comparing the square of the effective target signal (s) and square of the estimated target signal (s*) with a second cmparison factor (Ke);
- a decisional module (7) configured to establish the presence of multiplicative faults of the target sensor if at least one between the first (r/r+) and second ratios (r/r-) is greater than the first comparison factor (Kf) and at least one between the square of the effective target signal (s) and square of the estimated target signal (s*) is greater than said second comparison factor (Ke).

9. Device (1) according to claim 8, wherein the modules (2', 2", 2''') for determining the first (r+), second (r) and third quadratic differences (r-) comprise a pass-band filter (3, 3', 3") for filtering the effective target signal (s) and estimated target signal (s*) before determining their quadratic difference.

**10.** Device (1) according to claim 8 or 9, wherein the modules (2', 2'', 2''') for determining the first (r+), second (r) and third quadratic differences (r-) comprise a low-pass filter (4) for filtering the first (r+), second (r) and third quadratic differences (r-) before determining the first ratio (r/r+) and second ratio (r/r-).

**11.** Device (1) according to any of claims 8-10, comprising a first low-pass filter (12') for filtering the square of the effective target signal (s) and a second low-pass filter (12'') for filtering the square of the estimated target signal (s*) before their comparison with the second comparison factor (Ke).

**12.** Device (1) according to any of claims 8-11, wherein said one or more auxiliary sensors comprise an auxiliary sensor adapted to generate an auxiliary signal also representative of the target quantity, wherein said module for determining the estimated target signal (s*) is configured to identify the estimated target signal (s*) with the detected auxiliary signal.

**13.** Device (1) according to any of claims 8-11, wherein said one or more auxiliary signals of the one or more auxiliary sensors are representative of auxiliary quantities of the system besides the target quantity, wherein said module for determining the estimated target signal (s*) is configured to calculate the estimated target signal (s*) by mathematical relationships between the auxiliary quantities of the system represented by the one or more detected auxiliary signals.

**14.** Device (1) according to the preceding claim, wherein said module for determining the estimated target signal (s*) comprises a Kalman filter representative of the system.

**15.** Motorcycle (20) provided with active or semi-active suspensions comprising one or more devices for detecting multiplicative faults of its sensors according to any of claims 8-14.

**Patentansprüche**

**1.** Verfahren zum Bestimmen multiplikativer Fehler eines Sensors, der in einem System installiert ist, das eine Mehrzahl von Sensoren umfasst, wobei das Verfahren die folgenden Schritte umfasst:

- Erkennen eines effektiven Zielsignals (s) von einem Zielsensor, der für eine Zielmenge des Systems repräsentativ ist;
- Erkennen eines bzw. mehrerer Hilfssignale von einem oder mehreren Hilfssensoren des Systems neben dem Zielsensor, die für die Hilfsmengen des Systems stehen;

- Bestimmen eines geschätzten Zielsignals (s*), das für die Zielmenge des einen oder der mehreren Hifssignale repräsentativ ist;

**dadurch gekennzeichnet, dass** das Verfahren ferner umfasst:

- Bestimmen einer ersten quadratischen Differenz (r+) zwischen dem effektiven Zielsignal (s), das mit einem multiplikativen positiven Faktor (c+) größer als 1 multipliziert wird, und einem geschätzten Zielsignal (s*);
- Bestimmen einer zweiten quadratischen Differenz (r) zwischen dem effektiven Zielsignal (s) und dem geschätzten Zielsignal (s*);
- Bestimmen einer dritten quadratischen Differenz (r-) zwischen dem effektiven Zielsignal (s), das mit einem multiplikativen positiven Faktor (c-) kleiner als 1 multipliziert wird, und einem geschätzten Zielsignal (s*);
- Bestimmen eines ersten Verhältnisses (r/r+) zwischen der zweiten (r) und der ersten quadratischen Differenz (r+);
- Bestimmen eines zweiten Verhältnisses (r/r-) zwischen der zweiten (r) und der dritten quadratischen Differenz (r-);
- Vergleichen des ersten (r/r+) und zweiten Verhältnisses (r/r-) mit einem ersten Vergleichsfaktor (Kf);
- Bestimmen des Quadrats des effektiven Zielsignals (s);
- Bestimmen des Quadrats des geschätzten Zielsignals (s*);
- Vergleichen des Quadrats des effektiven Zielsignals (s) und des Quadrats des geschätzten Zielsignals (s*) mit einem zweiten Vergleichsfaktor (Ke);
- Herstellen des Vorhandenseins von multiplikativen Fehlern des Zielsensors, wenn mindestens eines zwischen erstem (r/r+) und zweitem Verhältnis (r/r-) größer als ein erster Vergleichsfaktor (Kf) ist, und mindestens eines zwischen dem Quadrat des effektiven Zielsignals (s) und dem Quadrat des geschätzten Zielsignals (s*) größer als der Vergleichsfaktor (Ke) ist.

**2.** Verfahren nach Anspruch 1, umfassend einen Schritt des Filterns, durch einen Passbandfilter (3, 3', 3''), des effektiven Zielsignals (s) und des geschätzten Zielsignals (s*) vor Bestimmen, der ersten (r+), zweiten (r) und dritten quadratischen Differenz (r-).

**3.** Verfahren nach Anspruch 1 oder 2, umfassend einen Schritt des Filterns, durch einen Passbandfilter, der ersten (r+), zweiten (r) und dritten quadratischen Differenz (r-) vor Bestimmen des ersten Verhältnisses (r/r+) und zweiten Verhältnisses (r/r-).

**4.** Verfahren nach einem der vorhergehenden Ansprüche, ferner umfassend einen Schritt des Filterns, durch einen Passbandfilter (12', 12"), des Quadrats des effektiven Zielsignals (s) und des Quadrats des geschätzten Zielsignals (s*) vor dem Vergleichen davon mit dem zweiten Vergleichsfaktor (Ke).

**5.** Verfahren nach einem der Ansprüche 1 bis 4, wobei der eine oder die mehreren Hilfssensoren einen Hilfssensor umfassen, der zum Erzeugen eines Hilfssignals ausgelegt ist, das sich von dem Zielsignal, das auch für die Zielmenge repräsentativ ist, unterscheidet, wobei der Schritt des Bestimmens eines geschätzten Zielsignals (s*) einen Schritt des Identifizierens des Hilfssignals umfasst, das mit dem geschätzten Zielsignal (s*) erfasst wird.

**6.** Verfahren nach einem der Ansprüche 1 bis 4, wobei das eine oder die mehreren Hilfssignale des einen oder der mehreren Hilfssensoren für Hilfsmengen des Systems neben der Zielmenge stehen, wobei der Schritt des Bestimmens des geschätzten Zielsignals (s*) einen Schritt des Berechnens des geschätzten Zielsignals (s*) durch mathematische Beziehungen zwischen den Hilfsmengen des Systems umfasst, die für das eine oder die mehreren erfassten Hilfssignale stehen.

**7.** Verfahren nach dem vorhergehenden Anspruch, wobei der Schritt des Bestimmens des geschätzten Zielsignals (s*), das für die Zielmenge von dem einen oder den mehreren Hilfssignalen repräsentativ ist, durch einen Kalman-Filter, der für das System steh, durchgeführt wird.

**8.** Verfahren (1) zum Bestimmen multiplikativer Fehler eines Sensors, der in einem System installiert ist, das eine Mehrzahl von Sensoren umfasst, wobei das Verfahren umfasst:

- einen Zielsensor zum Erfassen einer Zielmenge des Systems, der zum Erzeugen eines effektiven Zielsignals (s) ausgelegt ist, das für die Zielmenge des Systems repräsentativ ist;
- einen bzw. mehrere Hilfssensoren zum Erfassen einer oder mehrerer Hilfsmengen des Systems, die zum Erzeugen eines oder mehrerer Hilfssignale ausgelegt sind, die für die Hilfsmengen des Systems stehen;
- ein Modul zum Bestimmen eines geschätzten Zielsignals (s*), das für die Zielmenge von dem einen oder den mehreren Hilfssignalen repräsentativ ist;

**dadurch gekennzeichnet, dass** die Vorrichtung (1) ferner umfasst:

- ein Modul (2') zum Bestimmen einer ersten quadratischen Differenz (r+) zwischen dem effektiven Zielsignal (s), das mit einem multiplikativen positiven Faktor (c+) größer als 1 multipliziert wird, und dem geschätzten Zielsignal (s*);
- ein Modul (2') zum Bestimmen einer zweiten quadratischen Differenz (r) zwischen dem effektiven Zielsignal (s) und dem geschätzten Zielsignal (s*);
- ein Modul (2") zum Bestimmen einer dritten quadratischen Differenz (r-) zwischen dem effektiven Zielsignal (s), das mit einem multiplikativen positiven Faktor (c-) kleiner als 1 multipliziert wird, und einem geschätzten Zielsignal (s*);
- ein Modul (5') zum Bestimmen eines ersten Verhältnisses (r/r+) zwischen der zweiten (r) und der ersten quadratischen Differenz (r+);
- ein Modul (5") zum Bestimmen eines zweiten Verhältnisses (r/r-) zwischen der zweiten (r) und der dritten quadratischen Differenz (r-);
- ein Modul (6) zum Vergleichen des ersten (r/r+) und zweiten Verhältnisses (r/r-) mit einem ersten Vergleichsfaktor (Kf);
- ein Modul (10') zum Bestimmen des Quadrats des geschätzten Zielsignals (s);
- ein Modul (10") zum Bestimmen des Quadrats des geschätzten Zielsignals (s*);
- ein Modul (11) zum Vergleichen des Quadrats des effektiven Zielsignals (s) und des Quadrats des geschätzten Zielsignals (s*) mit einem zweiten Vergleichsfaktor (Ke);
- ein Entscheidungsmodul (7), das zum Herstellen des Vorhandenseins von multiplikativen Fehlern des Zielsensors konfiguriert ist, wenn mindestens eines von erstem (r/r+) und zweitem Verhältnis (r/r-) größer als ein erster Vergleichsfaktor (Kf) ist, und mindestens eines vom Quadrat des effektiven Zielsignals (s) und Quadrat des geschätzten Zielsignals (s*) größer als der zweite Vergleichsfaktor (Ke) ist.

**9.** Vorrichtung (1) nach Anspruch 8, wobei die Module (2', 2", 2") zum Bestimmen der ersten (r+), zweiten (r) und dritten quadratischen Differenz (r-) einen Passbandfilter (3, 3', 3") zum Filtern des effektiven Zielsignals (s) und des geschätzten Zielsignals (s*) vor Bestimmen ihrer quadratischen Differenz umfassen.

**10.** Vorrichtung (1) nach Anspruch 8 oder 9, wobei die Module (2', 2", 2") zum Bestimmen der ersten (r+), zweiten (r) und dritten quadratischen Differenz (r-) einen Niederpassfilter (4) zum Filtern der ersten (r+), zweiten (r) und dritten quadratischen Differenz (r-) vor dem Bestimmen des Verhältnisses (r/r+) und des zweiten Verhältnisses (r/r-) umfassen.

**11.** Vorrichtung (1) nach einem der Ansprüche 8 bis 10, umfassend einen ersten Niederpassfilter (12') zum Filtern des Quadrats des effektiven Zielsignals (s) und einen zweiten Niederpassfilter (12") zum Filtern des Quadrats des geschätzten Zielsignals (s*) vor dem Vergleich mit dem zweiten Vergleichsfaktor (Ke).

**12.** Verfahren (1) nach einem der Ansprüche 8 bis 11, wobei der eine oder die mehreren Hilfssensoren einen Hilfssensor umfassen, der zum Erzeugen eines Hilfssignals ausgelegt ist, das auch für die Zielmenge repräsentativ ist, wobei das Modul zum Bestimmen des geschätzten Zielsignals (s*) zum Identifizieren des geschätzten Zielsignals (s*) mit dem erfassten Hilfssignal konfiguriert ist.

**13.** Vorrichtung (1) nach einem der Ansprüche 8 bis 11, wobei das eine oder die mehreren Hilfssignale des einen oder der mehreren Hilfssensoren für Hilfsmengen des Systems neben der Zielmenge stehen, wobei das Modul zum Bestimmen des geschätzten Zielsignals (s*) zum Berechnen des geschätzten Zielsignals (s*) durch mathematische Beziehungen zwischen den Hilfsmengen des Systems konfiguriert ist, die für das eine oder die mehreren erfassten Hilfssignale stehen.

**14.** Vorrichtung (1) nach dem vorhergehenden Anspruch, wobei das Modul zum Bestimmen des geschätzten Zielsignals (s*) einen Kalman-Filter umfasst, der für das System repräsentativ ist.

**15.** Motorrad (20), das mit aktiven oder halbaktiven Aufhängungen bereitgestellt ist, die eine oder mehrere Vorrichtungen zum Erfassen multiplikativer Fehler ihrer Sensoren nach einem der Ansprüche 8 bis 14 umfassen.

## Revendications

**1.** Procédé de détermination de défauts multiplicatifs d'un capteur installé dans un système comprenant une pluralité de capteurs, comprenant les étapes consistant à:

    - détecter un signal cible efficace (s) d'un capteur cible, représentatif d'une quantité cible du système ;
    - détecter un ou plusieurs signaux auxiliaires, respectivement, d'un ou plusieurs capteurs auxiliaires du système en plus du capteur cible, représentatifs de quantités auxiliaires du système ;
    - déterminer un signal cible estimé (s*) représentatif de la quantité cible à partir du ou des signaux auxiliaires ;

**caractérisé en ce que** le procédé comprend en outre :

    - la détermination d'une première différence quadratique (r+) entre le signal cible efficace (s) multiplié par un facteur multiplicatif positif (c+) supérieur à 1, et le signal cible estimé (s*) ;
    - la détermination d'une deuxième différence quadratique (r) entre le signal cible efficace (s) et le signal cible estimé (s*) ;
    - la détermination d'une troisième différence quadratique (r-) entre le signal cible efficace (s) multiplié par un facteur multiplicatif positif (c-) inférieur à 1, et le signal cible estimé (s*) ;
    - la détermination d'un premier rapport (r/r+) entre les deuxième (r) et première différences quadratiques (r+) ;
    - la détermination d'un deuxième rapport (r/r-) entre les deuxième (r) et troisième différences quadratiques (r-) ;
    - la comparaison de premier (r/r+) et deuxième rapports (r/r-) à un premier facteur de comparaison (Kf) ;
    - la détermination du carré du signal cible efficace (s) ;
    - la détermination du carré du signal cible estimé (s*) ;
    - la comparaison du carré du signal cible efficace (s) et du carré du signal cible estimé (s*) à un deuxième facteur de comparaison (Ke) ;
    - l'établissement de la présence de défauts multiplicatifs du capteur cible si au moins l'un entre les premier (r/r+) et second rapports (r/r-) est supérieur au premier facteur de comparaison (Kf), et au moins un entre le carré du signal cible efficace (s) et le carré du signal cible estimé (s*) est supérieur audit deuxième facteur de comparaison (Ke).

**2.** Procédé selon la revendication 1, comprenant une étape de filtrage par un filtre passe-bande (3, 3', 3") du signal cible efficace (s) et du signal cible estimé (s*) avant détermination des première (r+), deuxième (r) et troisième différences quadratiques (r-).

**3.** Procédé selon la revendication 1 ou 2, comprenant une étape de filtrage par un filtre passe-bande des première (r+), deuxième (r) et troisième différences quadratiques (r-) avant détermination du premier rapport (r/r+) et du deuxième rapport (r/r-).

**4.** Procédé selon l'une quelconque des revendications précédentes, comprenant en outre une étape de filtrage par un filtre passe-bande (12', 12") du carré du signal cible efficace (s) et du carré du signal cible estimé (s*) avant leur comparaison au deuxième facteur de comparaison (Ke).

**5.** Procédé selon l'une quelconque des revendications 1 à 4, dans lequel ledit ou lesdits capteurs auxiliaires comprennent un capteur auxiliaire conçu pour générer un signal auxiliaire distinct du signal cible également représentatif de la quantité cible, dans lequel ladite étape de détermination du signal cible estimé (s*) comprend une étape d'identification du signal auxiliaire détecté avec le signal cible estimé (s*).

**6.** Procédé selon l'une quelconque des revendications 1 à 4, dans lequel ledit ou lesdits signaux auxiliaires du ou des capteurs auxiliaires sont représentatifs de quantités auxiliaires du système en plus de la quantité cible, dans lequel ladite étape de détermination du signal cible estimé (s*) comprend une étape de calcul du signal cible estimé (s*) par des relations mathématiques entre les quantités auxiliaires du système, représentées par le ou les signaux auxiliaires détectés.

**7.** Procédé selon la revendication précédente, dans lequel ladite étape de détermination du signal cible estimé (s*) représentatif de la quantité cible à partir du ou des signaux auxiliaires est effectuée par un filtre de Kalman représentatif du système.

**8.** Dispositif (1) pour déterminer des défauts multiplicatifs d'un capteur installé dans un système comprenant une pluralité de capteurs, comprenant :

- un capteur cible pour détecter une quantité cible du système, conçu pour générer un signal cible efficace (s) représentatif de la quantité cible du système ;
- un ou plusieurs capteurs auxiliaires, respectivement, pour détecter une ou plusieurs quantités auxiliaires du système, conçus pour générer un ou plusieurs signaux auxiliaires représentatifs des quantités auxiliaires du système ;
- un module pour déterminer un signal cible estimé (s*) représentatif de la quantité cible à partir du ou des signaux auxiliaires ;

**caractérisé en ce que** le dispositif (1) comprend en outre :

- un module (2') pour déterminer une première différence quadratique (r+) entre le signal cible efficace (s) multiplié par un facteur multiplicatif positif (c+) supérieur à 1, et le signal cible estimé (s*) ;
- un module (2') pour déterminer une deuxième différence quadratique (r) entre le signal cible efficace (s) et le signal cible estimé (s*) ;
- un module (2") pour déterminer une troisième différence quadratique (r-) entre le signal cible efficace (s) multiplié par un facteur multiplicatif positif (c-) inférieur à 1, et le signal cible estimé (s*) ;
- un module (5') pour déterminer un premier rapport (r/r+) entre les deuxième (r) et première différences quadratiques (r+) ;
- un module (5") pour déterminer deuxième rapport (r/r-) entre les deuxième (r) et troisième différences quadratiques (r-) ;
- un module (6) pour comparer les premier (r/r+) et deuxième rapports (r/r-) à un premier facteur de comparaison (Kf) ;
- un module (10') pour déterminer le carré du signal cible efficace (s) ;
- un module (10") pour déterminer le carré du signal cible estimé (s*) ;
- un module (11) pour comparer le carré du signal cible efficace (s) et le carré du signal cible estimé (s*) à un deuxième facteur de comparaison (Ke) ;
- un module décisionnel (7) configuré pour établir la présence de défauts multiplicatifs du capteur cible si au moins l'un entre les premier (r/r+) et second rapports (r/r-) est supérieur au premier facteur de comparaison (Kf), et au moins un entre le carré du signal cible efficace (s) et le carré du signal cible estimé (s*) est supérieur audit deuxième facteur de comparaison (Ke).

**9.** Dispositif (1) selon la revendication 8, dans lequel les modules (2', 2", 2") pour déterminer les première (r+), deuxième (r) et troisième différences quadratiques (r-) comprennent un filtre passe-bande (3, 3', 3") destiné à filtrer le signal cible efficace (s) et le signal cible estimé (s*) avant détermination de leur différence quadratique.

**10.** Dispositif (1) selon la revendication 8 ou 9, dans lequel les modules (2', 2", 2") pour déterminer les première (r+), deuxième (r) et troisième différences quadratiques (r-) comprennent un filtre passe-bas (4) destiné à filtrer les première (r+), deuxième (r) et troisième différences quadratiques (r-) avant détermination du premier rapport (r/r+) et du deuxième rapport (r/r-).

**11.** Dispositif (1) selon l'une quelconque des revendications 8 à 10, comprenant un premier filtre passe-bas (12') destiné à filtrer le carré du signal cible efficace (s) et un deuxième filtre passe-bas (12") destiné à filtrer le carré du signal cible estimé (s*) avant leur comparaison au deuxième facteur de comparaison (Ke).

**12.** Dispositif (1) selon l'une quelconque des revendications 8 à 11, dans lequel ledit ou lesdits capteurs auxiliaires comprennent un capteur auxiliaire conçu pour générer un signal auxiliaire également représentatif de la quantité cible, dans lequel ledit module pour déterminer le signal cible estimé (s*) est configuré pour identifier le signal cible estimé (s*) avec le signal auxiliaire détecté.

13. Dispositif (1) selon l'une quelconque des revendications 8 à 11, dans lequel ledit ou lesdits signaux auxiliaires du ou des capteurs auxiliaires sont représentatifs de quantités auxiliaires du système en plus de la quantité cible, dans lequel ledit module pour déterminer le signal cible estimé (s*) est configuré pour calculer le signal cible estimé (s*) par des relations mathématiques entre les quantités auxiliaires du système représentées par le ou les signaux auxiliaires détectés.

14. Dispositif (1) selon la revendication précédente, dans lequel ledit module pour déterminer le signal cible estimé (s*) comprend un filtre de Kalman représentatif du système.

15. Motocyclette (20) pourvue de suspensions actives ou semi-actives comprenant un ou plusieurs dispositifs de détection de défauts multiplicatifs de ses capteurs selon l'une quelconque des revendications 8 à 14.

FIG. 1

FIG. 2

**FIG. 3**

EP 3 077 229 B1

**FIG. 4**

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HEREDIA G. et al.** *Sensor fault detection in small autonomous helicopters using observer/Kalman filter identification*